(19) **Europäisches Patentamt / European Patent Office / Office européen des brevets**

(11) **EP 1 098 536 B1**

(12) **EUROPEAN PATENT SPECIFICATION**

(45) Date of publication and mention
of the grant of the patent:
**18.08.2010 Bulletin 2010/33**

(51) Int Cl.:
***H04N 9/31*** *(2006.01)*

(21) Application number: **00203878.4**

(22) Date of filing: **06.11.2000**

(54) **Colour recapture for projection systems**

Sequentielle Fabrückgewinnung für Projektionssysteme

Récupération de couleur séquentielle pour systèmes de projection

(84) Designated Contracting States:
**AT BE CH CY DE DK ES FI FR GB GR IE IT LI LU MC NL PT SE TR**

(30) Priority: **05.11.1999 US 163866 P**
**30.12.1999 US 173640 P**

(43) Date of publication of application:
**09.05.2001 Bulletin 2001/19**

(73) Proprietor: **Texas Instruments Incorporated**
**Dallas, Texas 75251 (US)**

(72) Inventors:
• **Dewald, Duane Scott**
**Dallas,**
**Texas 75248 (US)**
• **Penn, Steven M.**
**Plano,**
**Texas 75025 (US)**
• **Davis, Michael T.**
**Richardson,**
**Texas 75081 (US)**

(74) Representative: **Holt, Michael**
**Texas Instruments Limited**
**European Patents Department**
**800 Pavilion Drive**
**Northampton NN4 7YL (GB)**

(56) References cited:
**EP-A- 0 749 250    US-A- 5 650 832**
**US-A- 5 671 084    US-A- 5 921 650**

**Description**

FIELD OF THE INVENTION

This invention relates to the field of display systems, particularly to full colour display systems using a single light modulator, more particularly to sequential full colour display systems using falling raster or scrolling colour methods.

BACKGROUND OF THE INVENTION

Viewers evaluate display systems based on many criteria such as image size, resolution, contrast ratio, colour purity, and brightness. Image brightness is a particularly important metric in many display markets since the available brightness can limit the image size of a projected image and controls how well the image can be seen in venues having high levels of ambient light.

Projection display designers increase the brightness of a given projection display by increasing the light source used to form the image. Increasing the light source, however, also increases the cost, size, and weight of the display system. Additionally, larger light sources generate additional heat that must be dissipated by the display.

Many other factors affect the brightness of the images produced by the display system. One of the major factors is the number of modulators used to modulate the light used to produce the image. Display systems that use a modulator with a very fast response time, such as the digital micromirror device (DMD™), can use a single modulator to create a full colour image. Other display systems use three modulators, such as liquid crystal display (LCD) panels or DMDs, to create a full colour image.

Micromirror-based display systems typically operate the micromirrors in a digital, or bistable, manner. Digital operation fully deflects a given micromirror to either a first position or a second position. The illumination optics of the display device illuminate the entire array of micromirror cells. Micromirrors deflected to the first position reflect light along a first path, whereas micromirrors deflected to a second position reflect light along a second path. The projection optics of the display system collects the light from the mirrors in the first position and focus the light onto an image plane. The light reflected by mirrors in the second position is prevented from reaching the image plane. An image pixel associated with a mirror in the first position is brightly illuminated, whereas an image pixel associated with mirrors in the second position are not illuminated.

Pulse width modulation creates the perception of gray scale intensities with a digital micromirror device or other spatial light modulator. When using pulse width modulation, a given micromirror element is rapidly turned on and off in response to a digital intensity word. The duty cycle of the mirror determines the total amount of light contributed to an image pixel. If the pixel is pulsed quickly enough, the human eye will accurately measure the average intensity of the pixel, but will fail to detect the pulsing.

Full-colour images also are produced by taking advantage of the relatively slow response time of the human eye. Each frame period is divided into at least three periods. During each period, a primary colour image is produced. If the primary colour images are produced in rapid succession, the eye will perceive a single full-colour-image.

An alternative to the sequential colour display system is a three-modulator display system. The three-modulator display system is very similar to the sequential colour display system in that they both form full colour images by the combining three primary colour images. The disadvantage of the three-modulator display system is the cost of the three modulators and the complex optics required both to split the white light beam from the light source into three primary colour light beams and to recombine the modulated primary colour light beams.

The disadvantage of the single-modulator sequential colour display systems is its low image brightness. Because the white light source is time-divided into three primary colour light beams, most of the light at any given time is not used. For example, when the blue primary colour image is being formed, the green and red output of the white light source are filtered out of the light beam. Thus, a sequential colour display system, while generally less expensive than the three-modulator display system, makes very inefficient use of the light produced by the light source.

The lost light not only reduces the brightness of the image produced by the display system, discarding the light creates several problems for the display system. The light filtered out of the light beam generally becomes stray light that the display system must control to prevent from reaching the image plane and degrading the contrast of the displayed image. The off-primary light is generally converted to heat. The heat must be dissipated by using larger fans, which in turn increase the noise produced by the display system and increase the size of the display system.

What is needed is an efficient illumination system that is capable of providing the efficiency of a three-modulator display system while taking advantage of the simplified optics and low cost of a one-modulator display system.

U.S. Patent No. 5,650,832 describes a display system including a color wheel, in which the color wheel is movable into and out of the path of the source light, to provide varying levels of color saturation or brightness. This document also describes such a system with a light integrator disposed between the color wheel and the spatial light modulator, to provide color uniformity in the light directed to the spatial light modulator.

## SUMMARY OF THE INVENTION

Objects and advantages will be obvious, and will in part appear hereinafter and will be accomplished by the present invention that provides a display system and a method of producing an image, as set forth in the appended claims.

The disclosed invention provides the technical advantage of much higher illumination efficiency. Since all colour components of the beam of light are used at all times, the disclosed system and method achieve three modulator panel system efficiencies using only a single modulator panel. The higher efficiency enables the use of lower cost light sources that have longer operational lives and produce less heat. The apparatus required to implement the disclosed invention is much less costly than the optics and modulator panels required to implement a three panel display solution. Because less heat is generated, the overall display system volume will decrease since there is a reduced need for cooling fans and air ducts.

## BRIEF DESCRIPTION OF THE DRAWINGS

For a more complete understanding of the present invention, and the advantages thereof, reference is now made to the following descriptions taken in conjunction with the accompanying drawings, in which:

FIGURE 1 is a perspective view of a sequential colour display system of the prior art.
FIGURE 2 is a block diagram of a scrolling colour display system capable of recycling the light rejected by the colour filters according to one embodiment of the present invention.
FIGURE 3 is a plan view of one embodiment of a colour wheel suitable for use with the disclosed recycling scrolling colour illumination system.
FIGURE 4 is a plan view of a second embodiment of a colour wheel suitable for use with the disclosed recycling scrolling colour illumination system.
FIGURE 5 is a plan view of a spatial light modulator illuminated by a light beam filtered to result in three lateral primary colour segments.
FIGURE 6 is a plan view of the spatial light modulator of Figure 5 as the three primary colour segments shift across the spatial light modulator.
FIGURE 7 is a plan view of the spatial light modulator of Figure 5 as the three primary colour segments shift further across the spatial light modulator.
FIGURE 8 is a side view of a recycling scrolling colour illumination system according to one embodiment of the present invention.
FIGURE 9 is a side view of one embodiment of an integrating rod for use with the disclosed recycling scrolling colour illumination system.
FIGURE 10 is a side view of a recycling scrolling colour illumination system according to an embodiment of the present invention using a colour filter belt.
FIGURE 11 is a plan view of the colour wheel of Figure 3 showing the relationship between colour wheel and a cross section of the optical path of the display system.
FIGURE 12 is a plan view of a portion of a spiral colour wheel similar to the colour wheel shown in Figure 4 showing the alignment of the spiral colour wheel with the cross section of the display system optical path.
FIGURE 13 shows the addition of an optional white filter segment to each set of primary colour filters in the colour wheel of Figure 13.
FIGURE 14 is a perspective view of one embodiment of an integrator rod designed to recycle light passing through it.
FIGURE 15 is a plan view of a portion of the colour wheel of Figure 4 detailing the curvature of the filter segments.
FIGURE 16 is a plan view of a two-modulator scrolling colour recapture display system according to one embodiment of the present invention.
FIGURE 17 is a plot of the collection efficiency for various arc sizes over a range of aperture sizes.
FIGURE 18 is a plot of the modeled recycling efficiency of an integrator rod having a mirrored input face for various input aperture diameters.
FIGURE 19 is a plot of the modeled overall reflector and integrator recycling efficiency for a range of mirrored integrating rod aperture sizes.

## DETAILED DESCRIPTION OF THE PREFERRED EMBODIMENTS

A new optical system and method have been developed that improves the optical efficiency of sequential colour display systems. The system uses a sequential colour concept called falling raster or scrolling colour in which the illumination beam laterally changes colour. The light rejected by the sequential filters is recycled, that is collected and presented to the filter again, increasing the efficiency of the system. Since more than one colour is being displayed at a given time, light rejected by one filter segment can pass through another filter segment if it is successfully routed to another proper filter segment.

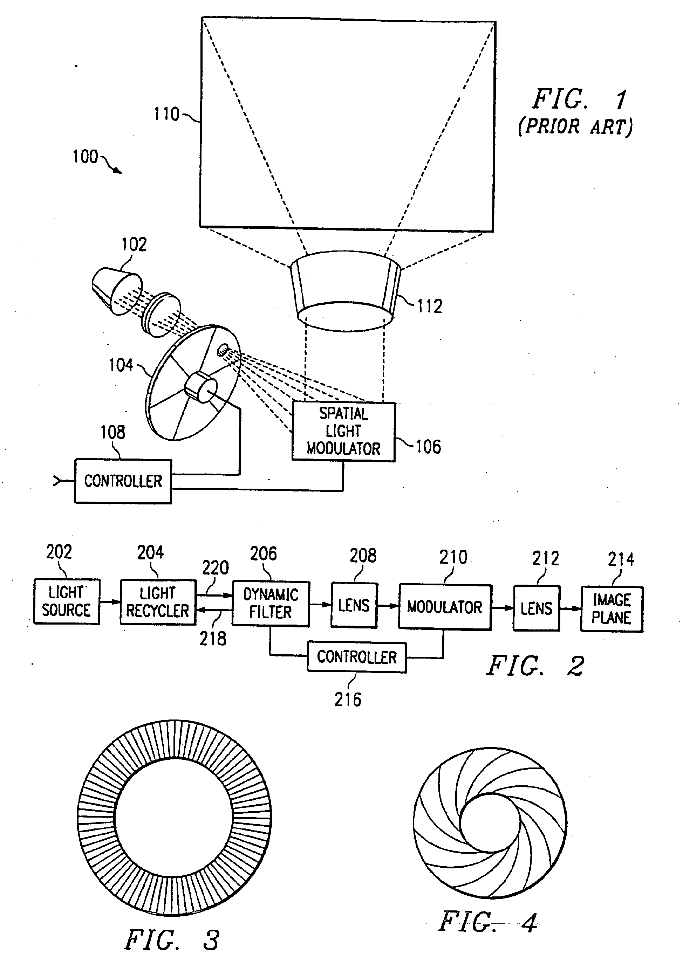

Figure 1 is a perspective view of a sequential colour display system 100. In the display system 100 of Figure 1, light from source 102 is focused onto a spinning colour wheel 104. The spinning colour wheel 104 creates of beam of light that changes from one primary colour to the next in rapid sequence. The primary coloured beam of light impinges a spatial light modulator 106, in this case a DMD.

A controller 108 receives a video signal and sends image data to the spatial light modulator 106 in synchronization with the colour wheel 104. Image data representing the red portions of the image is sent during the period in which the red colour filter is passing through the beam of light. The modulated red beam of light is focused onto an image plane 110 by projection lens 112 to form a red image. The process is repeated as the green and blue filters pass through the path of the light beam. The eye of the viewer integrates the three primary colour images giving the perception of a single full-colour image.

Figure 2 is a block diagram of a sequential colour recycling system according to one embodiment of the present invention. In Figure 2, light source 202 provides a beam of light to a light recycler 204. The light recycler 204, which sometimes includes the lamp housing or reflector, homogenizes the beam of light and passes it to a dynamic filter 206. The dynamic filter is typically a set of moving dichroic filters, such as a colour wheel. Each filter in the dynamic filter has a passband in which light of a range of wavelengths is selected, in this case transmitted, while out of band light is rejected, in this case reflected.

Light transmitted by the dynamic filter 206 is focused by lens 208 onto a spatial light modulator 210. The spatial light modulator 210 modulates the light to form an image beaming beam of light that is focused by lens 212 onto an image plane 214. As in Figure 1, controller 216 receives image data and sends primary colour image data to the modulator 210 in synchronization with the dynamic filter 206.

As described above, the dynamic filter transmits light in its passband and rejects light outside its passband. Figure 2 shows the rejection path leading back to the light recycler 204. The light recycler 204 receives the rejected light and reflects it back to the dynamic filter 206. If the recycled light strikes a filter having a different passband it may be transmitted to lens 208. Rejected portions of the recycled light are again recycled by the light recycler 204 and presented to the dynamic filter 206. This process continues until the light is either absorbed by the light recycler 204, accepted by the dynamic filter 206, or escapes the light recycler 204.

One element of the system shown in Figure 2 is the dynamic filter 206. The dynamic filter must provide one or more segments of each primary colour filter to the light beam at all times in order for all of the recycled light to be able to find a filter through which it may pass. Although the filters for each colour need not be the same size, if the recycling operation is efficient there may be no advantage to unequal sized filters.

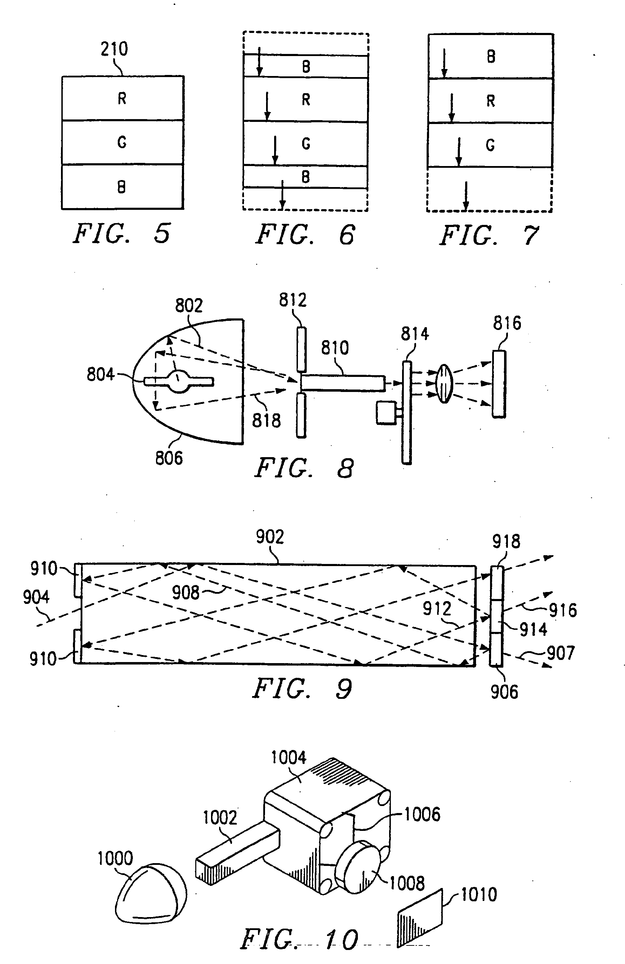

Figures 3 and 4 are plan views of two embodiments of multi-segment colour wheels. Both of the colour wheels shown in Figures 3 and 4 have a large number of small segments. Each segment transmits one of the primary colours and rejects the other two primary colours. Light from the colour wheel is imaged onto the spatial light modulator such that a separate portion of the spatial light modulator is illuminated by each filter. Figure 5 shows a spatial light modulator 210 onto which light from a three-colour dynamic filter 206 is imaged.

Since the modulator is typically arranged in horizontal rows of modulator cells that receive many of the same operating signals and bias voltages, the operation of the modulator is much more efficient when the primary colour segments have horizontal boundaries and move vertically from row to row. The modulator elements can also be arranged in vertical groups of columns, in which case the primary colour segments should have vertical boundaries and move horizontally from column to column.

Colour wheels like the one shown in Figure 3 tend to produce pie shaped primary colour segments with tilted boundaries between the segments. As the radius of the colour wheel increases, the angle between the segments decreases. Large colour wheels are undesirable since they require a larger system package, a larger motor to turn them, and their larger inertia makes it more difficult to change the speed of the colour wheel to align the colour wheel to the video signal.

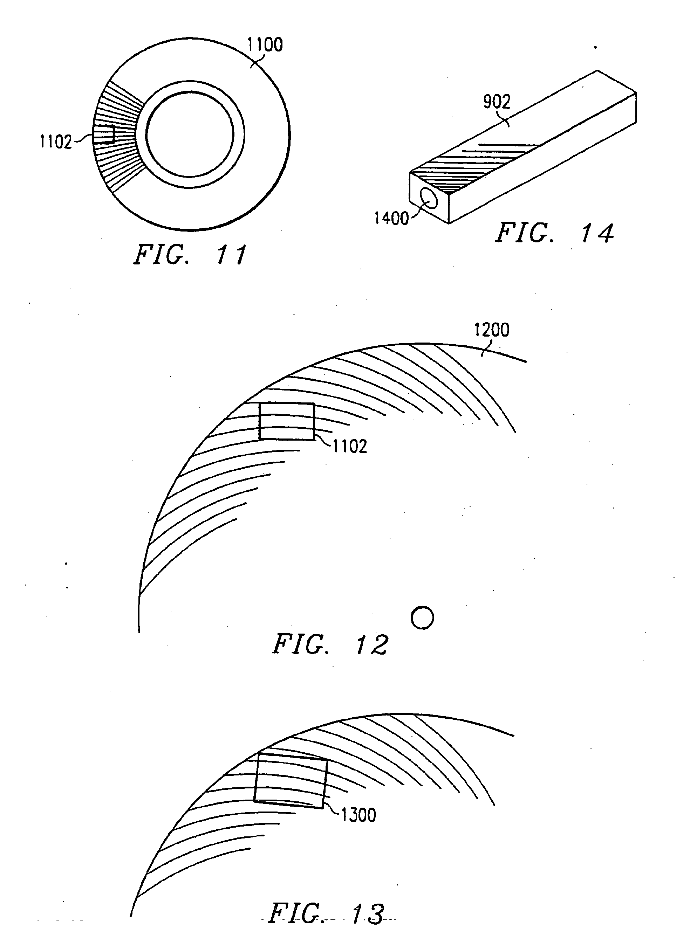

Figure 11 is a plan view of the colour wheel 1100 of Figure 3 showing the relationship between colour wheel and a cross section of the optical path 1102 of the display system. The optical path 1102 is the area illuminated by the light leaving the integrator rod 810 shown in Figure 8. The integrator rod is typically positioned very close to the colour wheel to ensure that light reflected by the colour wheel is recaptured by the integrating rod. The optical path cross section 1102 shown in Figure 11 is also illustrative of the alignment between the colour wheel 1100 and the modulator, since the portion of the colour wheel 1100 passing through the cross section of the optical path 1102 is imaged onto the modulator. The colour wheel of Figure 11 is 70mm in diameter and has 40 sets of primary filters, typically red, green, and blue, for a total of 120 filter segments. Rotating the wheel at only 90 rpm supports a 60 hz frame rate, though a higher rate may be required to reduce temporal artifacts.

One advantage of the disclosed illumination system is the ability to spin the colour wheel at a very low rate. Slow colour wheels are safer since pieces of a broken colour wheel-which is often glass-that is spinning slowly have much less momentum that pieces of a rapidly spinning colour wheel. The slower colour wheel also generates much less noise, which is a valuable trait in most display system applications. Slower colour wheels also enable the use of smaller colour wheel motors and do not need to be balanced as accurately as faster colour wheels.

The spiral colour wheel of Figure 4 is used to reduce the size of the colour wheel while maintaining good alignment between the modulator and the illuminated segments of the colour wheel. The spiral colour wheel shown in Figure 4 has colour filters whose boundaries form the "spiral of Archimedes." The spiral of Archimedes is defined by:

$$r = a\,\theta$$

where r is the radius or distance of said interface from said center, a is a constant, and θ defines an arc between said interface and a reference. A different reference is used for each boundary between two filters.

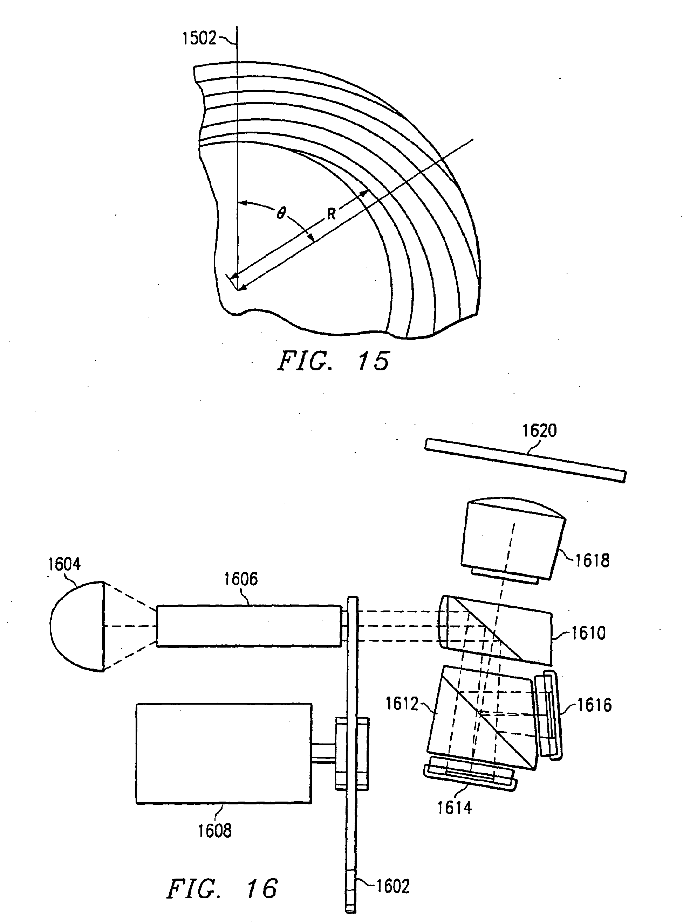

Figure 15 shows the relationship between the reference 1502, θ, and the radius r. The result of using the spiral of Archimedes is that each boundary approximates an inclined plane sliding past the light valve. The boundary is not straight, so it cannot be parallel to the rows of modulator elements. The boundary does, however, form a very shallow curve that is tangential to the rows of the modulator elements and the boundary maintains the same curve and speed across the entire face of the modulator, even when using a small filter wheel.

The spirals are designed and aligned to the spatial light modulator such that the tangent of the boundaries between adjacent segments is approximately horizontal to the rows of spatial light modulator. As the spiral wheel turns, the portion of the spiral passing through the beam of light shifts along the spiral maintaining good alignment between the segments and the modulator.

Figure 12 is a plan view of a portion of a spiral colour wheel 1200 similar to the colour wheel shown in Figure 4 showing the alignment of the spiral colour wheel with the cross section of the display system optical path 1102. The filter segments of the spiral colour wheels in Figures 4 and 12 move horizontally and vertically with respect to the optical path cross section 1102 as the wheel rotates. This improves the alignment between the filter segments and the horizontal rows of modulator elements across the entire modulator array. The colour wheel of Figure 12 has 24 sets of primary colour filters, for a total of 72 filter segments. Assuming 10 sets of filters are required to form each frame, rotating the wheel at 25 Hz supports a 60 Hz frame rate.

Figure 13 shows the addition of an optional white filter segment 1300 to each set of primary colour filters. The use of a white segment increases the overall system brightness in sequential colour systems, but at the cost of decreased image saturation. Because the recycling operation is not 100% efficient-for reasons described below-the use of a white segment increases the efficiency of the illumination system by 25%.

Although current DMD designs group the modulator elements in reset groups comprised of a number of complete rows, future designs can group the elements in groups comprised of a number of complete columns of elements. Changing the grouping of the elements would require changing the orientation of the light valve outline 1102 shown in Figure 12, and would provide a better match between the boundaries of the filter segments and the reset groups. As mentioned above, the spiral of Archimedes colour segments provide a curved boundary between segments. This curve prevents perfect alignment between the reset groups and the filter boundaries. The longer the segment of the boundary illuminated, the greater the effect of the curvature on the alignment. Turning the modulator 90° from the orientation shown in Figure 12 uses a shorter portion of the boundary and allows the use of larger filter segments, especially when used with widescreen formats such as the 16:9 HDTV format.

As the colour wheel turns, the three primary colour segments imaged onto the spatial light modulator move across the face of the spatial light modulator. Figure 6 shows the three primary colour segments of Figure 5 shifted lower on the face of the spatial light modulator 210. As seen in Figure 6, as soon as one primary colour segment starts to leave the face of the spatial light modulator, another segment of the same colour starts to enter. Figure 7 shows the three primary colour segments of Figure 5 after they have shifted the width of one segment.

Since each colour appears on a different region of the modulator at any given time, the image data provided to the modulator is a mixture of data for all three primary colours. For example, while one region of the modulator is operated using red data, other regions of the modulator are operated using green and blue data. Due to limitations imposed by the addressing circuitry and the ability to precisely control the sweep of the boundaries between the regions across the spatial light modulator, the rows of the spatial light modulator are typically divided into several groups and each group receives data for a single primary colour. During periods in which the boundary between two regions sweeps across a given group of rows, the group is either turned of or used to create a white component using methods referred to as spoke light recapturing.

Figure 8 is a side view of one embodiment of a sequential colour recycling display system. In Figure 8, light 802 from an arc lamp 804 is reflected by a reflector 806 and enters an integrating rod 810 through an aperture in a reflective aperture plate 812. Various integrating rods 810 are used. For example, the integrating rod 810 can be a hollow structure with a reflective internal surface or a solid rod that used total internal reflection to retain the light passing through it. The light entering the integrating rod 810 reflects on the surface of the integrating rod several times until the beam traveling through the integrating rod 810 assumes a uniform cross-section.

Light exiting the integrating rod 810 impinges on the dynamic filter, shown in Figure 8 as a colour wheel 814. Some light impinging on the colour wheel 814 passes through each of the three or more segments illuminated by the beam. Each segment transmits some of the incident light and reflects the remainder. Light transmitted by the colour wheel 814 is focused onto the spatial light modulator 816.

The light rejected by the colour wheel 814 travels back through the integrating rod 810. In the embodiment shown in Figure 8, the light is allowed to exit the integrating rod and is reflected by the lamp reflector 806 before re-entering the integrating rod 810. Referring back to Figure 2, the light recycler 204 is comprised of both the integrating rod 810 and the reflector 806 of Figure 8. The recycled light 818 is once again homogenized by the integrating rod 810 before impinging on the dynamic filter 814. The recycled light 818 in Figure 8 has a 1/3 chance of striking the same filter a second time and once again being rejected, a 1/3 chance of striking an second filter and being rejected, and a 1/3 chance of striking a second filter and being transmitted.

The recycling process continues until the light either reaches a portion of the dynamic filter through which it can pass, or until the light is absorbed by or escapes the light recycler. The light being recycled can be absorbed by the surface coatings of the reflector 806 as well as being absorbed when it strikes an electrode of the arc lamp.

Figure 14 is a perspective view of one embodiment of an integrator rod 902 designed to recycle light passing through it. Figure 9 is a cross section of an integrator rod 902 from Figure 14. Light 904 from a light source enters the rod through an aperture in a mirrored entrance end of the rod 902. The aperture is approximately 1/3 of the area of the rod end. The small aperture is especially suitable when combined with low power lamp sources whose arc is typically smaller than the high powered sources. Since the use of the integrator rod 902 in a scrolling colour recycling display system greatly increases the overall system efficiency, a lower-power light source is needed to maintain a given system brightness level.

The integrating rod 902 is typically a solid glass bar, other materials are available. For example, some integrating rods are hollow structures with internally mirrored surfaces. The integrating rod typically has the same cross section aspect ratio as the modulator used by the display system.

The mirrored end surface of the integrating rod 902 reflects light striking the integrating rod outside the aperture 1400 shown in Figure 14. This light is reflected back to the lamp and reflector and has a high probability of returning to the integrator at the proper position and angle to be transmitted through the aperture 1400. The reflective aperture shown in Figure 14 has been demonstrated to provide an 8 to 15 percent brightness gain.

The light entering the rod is reflected several times as it travels through the rod. As the light exits the exit end of the rod 902, it strikes a first segment 906 of a dynamic filter which allows a first band 907 of the light to pass through. The remainder of the light 908 is reflected by the first segment 906 of the dynamic filter and travels through the integrator rod in the reverse direction. The remainder of the light 908 is reflected by a mirror 910 deposited on the entrance end of the integrating rod 902 and again travels through the rod 902 in the first direction. The recycled light 912 eventually impinges on a second segment 914 of the dynamic filter allowing a second band 916 to pass through. The remainder of the light is recycled again until it eventually strikes the third segment 918 of the dynamic filter and the third band passes through.

Using the integrator rod 902 of Figures 9 and 14, with an entrance aperture 1400 area of 1/3 the area of the end of the rod, 1/3 of the light reflected by the first segment 906 exits the integrating rod and returns to the lamp and reflector. Because this light is traveling toward the lamp from a point very near the second focus of the reflector, it has a high probability of passing near the arc and being focused by the reflector back into the input aperture 1400.

The remaining 2/3 of the light reflected by the first segment 906-the portion reflected by the mirrored end 910 of the integrator rod-has a 2/3 chance of striking either the second 914 or third 918 filter segments. Since the light only contains two primary components, the third primary component having already passed through the first filter segment, 50% of the light striking the second and third filter segments is accepted by the filter segments and passes through the colour wheel. The remaining portion is again recycled and presented to the colour wheel. Assuming no reflection losses, the theoretical efficiency of such a system would be:

$$Efficiency = \left(1/3\right)\left[1 + \left(2/3\right)^2 + \left(2/3\right)^4 + \left(2/3\right)^6 + ....\right] \approx \left[1.78\right]$$

In other words, the system has the potential to be up to 1.8x more efficient than a field-sequential illumination system given the lamp etendue is decreased sufficiently. Assuming a large loss per reflection of 5%, the efficiency series converges to a 1.65x efficiency gain. The efficiency calculations above assume the light returning to the lamp and reflector is lost. As described above, recycled light passing through the input aperture 1400 returns to the lamp and reflector assembly and has a good chance of returning to the input aperture. Modeling shows that the light returning to the input aperture from the lamp and reflector assembly increases the efficiency of the illumination system by up to 20% above that described above. In practice, however, there appears to be much less light recycled through the lamp and reflector as it is difficult to measure much light recycling through the lamp and reflector. Nevertheless, it is possible to eliminate the mirrored end of the integrating rod and allow all of the recycled light to return to the reflector. The reflector is therefore considered part of the light recycler 204 of Figure 2.

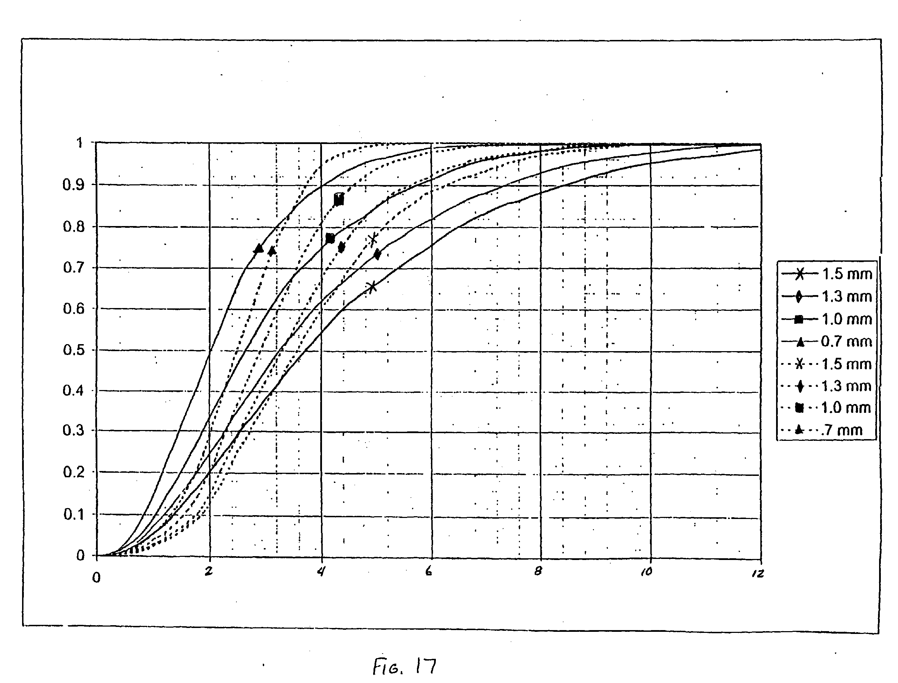

The size of the aperture in the mirrored end of the integrating rod has a large effect on the overall efficiency of the system. In general, the larger the aperture the more efficient the light collection system, but the less efficient the recycling. Likewise, a smaller aperture increases the recycling efficiency, but reduces the amount of light able to enter the integrating rod. Figures 17-19 illustrate the effects of arc size and aperture size on the efficiency of the light collection system.

Figure 17 is a series of plots showing the modeled collection efficiency versus collection aperture diameter for various lamp arc sizes and reflector designs. In Figure 17, the aperture diameter in millimeters is represented by the x-axis, while the y-axis represents the f/1 collection fraction. The arc sizes range from 0.7 mm to 1.5 mm. Traces using a solid line illustrate the collection efficiency of elliptical collectors. Traces using broken lines illustrate the collection efficiency of parabolic reflectors.

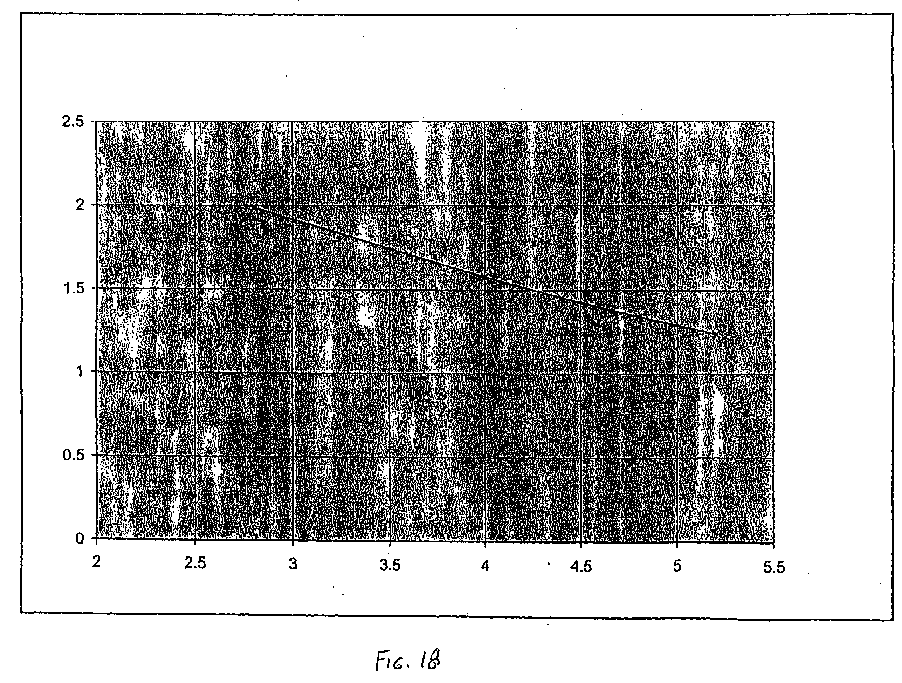

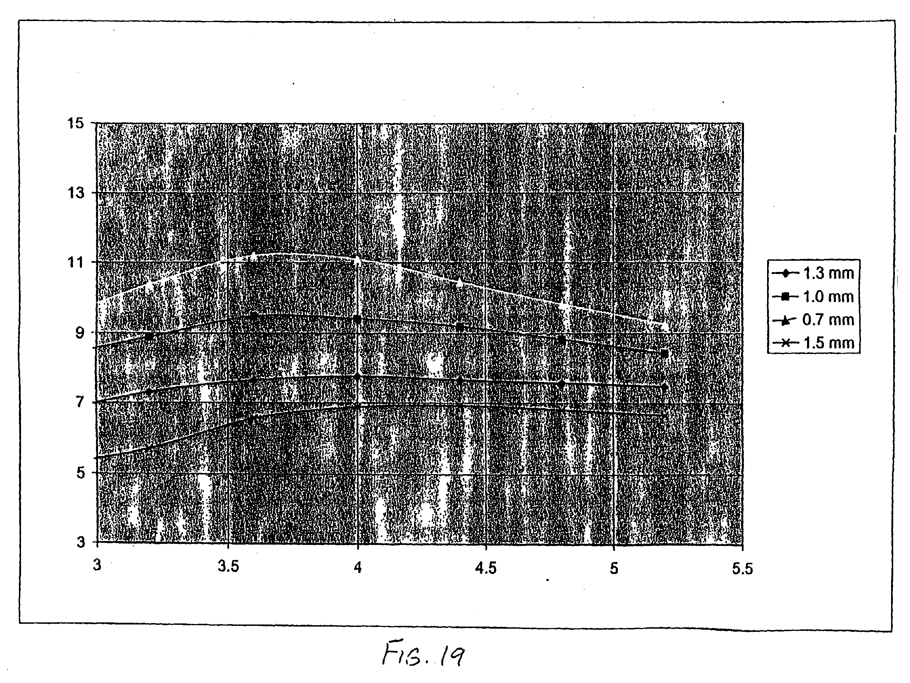

Figure 18 is a plot of the recycling gain realized by a 6.4 mm x 4.8 mm integrator rod over a range of mirrored input aperture sizes. In Figure 18, the x-axis represents the input aperture diameter in millimeters, while the y-axis represents the recycling gain. Figure 18 assumes a 7% reflection loss for each pass through the integrating rod. Figure 19 is a plot combining the data from Figures 17 and 18 to show the overall illumination efficiency over a range of input aperture sizes for several lamp arc sizes. As shown in Figure 19, which plots the illumination efficiency in Lumens/watt on the y-axis and the input aperture on the x-axis, the larger the lamp arc size the larger the optimum input aperture of the integrating rod.

Adding the efficiency gains achieved by using a white segment, the overall efficiency of a display projector is increased by up to 120% (2.2x). This efficiency gain enables the use of a one-modulator display system in applications that previously required a three-modulator display. Alternatively, a much lower power lamp is used to provide an equivalent brightness to systems that do not use scrolling colour recycling. The increase in efficiency has a direct effect on the overall heat load on the projector since the unused light is recycled instead of being absorbed as heat.

Although the embodiments described thus far have used either pie-shaped or spiral-shaped segments of a colour wheel, many other embodiments are possible. For example, various filter drums, belts, or other arrangements are equally applicable. Figure 10 is a perspective view of one embodiment of an illumination path using a filter belt. In Figure 10, a light source 1000 provides a white light beam to an integrating rod 1002. The integrating rod homogenizes the beam of white light and provides the beam of light to a rotating filter belt 1004. Light rejected by the filter belt 1004 returns through the integrating rod to be recycled. Light passing through the filter belt is reflected by a mirror 1006 and focused onto the spatial light modulator 1010 by a lens 1008. As with the previous embodiments, careful optical design is necessary to recapture and recycle the rejected illumination. For example, the dynamic filter is typically located very close to the integrating rod to ensure most of the light rejected by the dynamic filter reenters the integrating rod.

The greatest efficiency gains are achieved when implementing sequential colour recycling in a one-panel (single LCD, DMD, or other modulator) display system. The sequential colour recycling methods and apparatus described above allow a single-panel system to achieve much higher efficiencies that were previously possible. Application of the methods and systems taught herein, however, is not limited to single-panel display systems. The same techniques are applicable to two and three panel displays, but typically result in a more expensive display system.

U.S. Patent No. 5,612,753 describes a two panels system that uses one panel to sequentially produce two primary colour images while the second panel produces a third primary colour image. The concepts of scrolling colour recapture are applied to the two panel display system shown in Figure 16. In Figure 16, a spiral colour wheel 1602 filters light from source 1604 that has been homogenized by the integrating rod 1606. The spiral colour wheel 1602 contains many pairs of colour filters and is spun by motor 1608. Each filter allows two primary colours to pass, and rejects one primary colour. The filters are selected so that both pass one of the primary colours. One of the other primary colours is passed by one of the filters, and the other primary colour is passed by the other filter. For example, a first filter passes magenta light-light comprised of the red and blue primaries, while the other filter passes yellow light-light comprised of the red and green primaries. The filtered light enters a TIR prism assembly 1610 that reflects the light to a colour splitting prism assembly 1612. A dichroic filter at the interface between the two prisms in the colour splitting prism assembly 1612 separates the primary colour passed by both filters from the other two primaries. For example, the red light passes through the dichroic filter and is modulated by DMD 1614. The other two primaries are reflected by the dichroic filter and modulated by DMD 1616.

The filtering results in modulator 1614 is always completely illuminated by red light, while blue and green light scroll across modulator 1616. The light rejected by the filter segments of the colour wheel consists of the blue and green components and is recycled.

The light modulated by the spatial light modulators retraces its path through the colour prisms. Because the DMDs changed the angle of the modulated light, the modulated light passes through the interface between the TIR prisms without reflecting at the interface. The modulated light is focused by projection lens 1618 onto image plane 1620 to form an image.

The dynamic filter thus far has been described as a moving set of dichroic filters. Other types and arrangements of filters are also useful. For example, a set of stationary filters in combination with an apparatus to sweep the primary colour beams across the surface of the modulator is another form of dynamic filter. Likewise, solid-state colour switches could be used in other embodiments.

Several methods of adjusting the white point and colour gamut of the system described are available. First, the image data used to create each primary colour can be scaled to reduce the maximum intensity of certain primary components. Alternatively, variable filter densities are used to reduce the brightness of some of the primary light components prior to modulation. Additionally, because the recycling system is not 100% efficient, adjusting the relative size of the colour filters alters the white point of the display system by increasing the odds certain primary components of the light will be accepted by the filters. Increasing the odds of a given primary component being accepted reduces the loss that would otherwise be experienced by each additional reflection and the loss that would occur as some the light escapes to the reflector and does not return to the integrating rod.

As described above, colour wheels tend to produce pie-shaped colour segments that move across the modulator. The angle of the borders between the segments changes as the light from the colour wheel moves across the face of the modulator. The spiral of Archimedes design helps to keep the angle of the border constant as the colour segments move across the modulator, but produces a curved border and is difficult to build. Light that changes colour, or is a mixture of primary colours, is difficult to use. The mixed light can be used to create secondary colours or white, boosting the brightness of the display system, but sacrificing colour purity. Alternatively, the spoke light is discarded by turning off the modulator elements during the period in which the light received by the elements is changing colours.

Thus, although there has been disclosed to this point a particular embodiment for a method and system for sequential colour recapture, it is not intended that such specific references be considered as limitations upon the scope of this invention except insofar as set forth in the following claims. Furthermore, having described the invention in connection with certain specific embodiments thereof, it is to be understood that further modifications may now suggest themselves to those skilled in the art, it is intended to cover all such modifications as fall within the scope of the appended claims.

**Claims**

**1.**   1. A display system comprising:

a light source (804) for producing a beam of white light (904);
a dynamic filter (814) for filtering said beam of white light, the dynamic filter including at least two regions (906, 914) having a different predetermined passband;
a spatial light modulator (816) for selectively modulating light transmitted by the dynamic filter (814); and
a lens (212) for focusing the light modulated by the light modulator (816) on an image plane;
wherein a first region (906) of said dynamic filter is adapted to transmit a first primary color beam (907) to the spatial light modulator (816) and to reflect a first remainder beam (908); and
wherein a second region (914) of said dynamic filter is adapted to transmit a second primary color beam (916) to the spatial light modulator (816) and to reflect a second remainder beam;
**characterized by**
a light recycler (204) comprising

a light integrator (902) for recapturing at least said first remainder beam (908) and
a light reflector (910) for reflecting at least a portion of said first remainder beam (912) back to said second region of the dynamic filter (914),
wherein the light integrator is positioned between the light reflector (910) and the dynamic filter (814) and wherein said at least two regions of the dynamic filter (906; 914) are arranged to simultaneously transmit light in their predetermined passband to the spatial light modulator (816) and to reflect light outside their predetermined passband to the light recycler (204).

**2.**   The display system of Claim 1, wherein the light integrator (204; 810; 902; 1606) is arranged to homogenize the reflected light.

3. The display system of any preceding claim, wherein said light integrator (204; 810; 902; 1606) comprises a reflective enclosure.

4. The display system of any preceding claim, wherein said light integrator (204; 810; 902; 1606) comprises a glass rod.

5. The display system of any preceding claim, wherein said light integrator (204; 810; 902; 1606) comprises a mirrored glass rod.

6. The display system of any preceding claim, wherein said light integrator (204; 810; 902; 1606) comprises a hollow cylinder.

7. The display system of any preceding claim, wherein said light integrator (204; 810; 902; 1606) comprises a reflective hollow rectangular cylinder.

8. The display system of any preceding claim, wherein said light integrator (204; 810; 902; 1606) comprises a reflective entrance aperture.

9. The display system of any preceding claim, wherein said light integrator (204; 810; 902; 1606) comprises a retro-reflective entrance aperture.

10. The display system of any preceding claim, wherein said filter (206; 814; 1602) is a colour wheel.

11. The display system of any preceding claim, wherein said filter (206; 814; 1602) is a three colour, colour wheel.

12. The display system of any preceding claim, wherein said filter (206; 814; 1602) further comprises a region transmitting white light.

13. The display system of any preceding claim, wherein said filter (206; 814; 1602) is a colour wheel having a plurality of filter segments.

14. The display system of any preceding claim, wherein said filter (206; 814; 1602) is a colour wheel having a plurality of filter segments arranged in a spiral.

15. A method of producing an image, said method comprising the steps of:

> providing a beam of white light (904);
> impinging said beam of white light on at least two regions of a dynamic filter (814)-each region having a different predetermined passband;
> selectively modulating the light transmitted by the dynamic filter by a spatial light modulator (816);
> focusing the light modulated by the light modulator (816) on an image plane (214),
> wherein a first region (906) of said dynamic filter transmits a first primary color beam (907) to the spatial light modulator (816) and reflects a first remainder beam (908); and
> wherein a second region (914) of said dynamic filter transmits a second primary color beam (916) to the spatial light modulator (816) and reflects a second remainder beam;
> **characterized by**
> recycling the light reflected by the dynamic filter by
> recapturing at least said first remainder beam (908) in a light integrator (902) and
> reflecting at least a portion of said first remainder beam (912) back to said second region of the dynamic filter (914) with a reflector (910),
> wherein the light integrator (902) is positioned between the light reflector (910) and the dynamic filter (814) and wherein said at least two regions of the dynamic filter (906; 914) are simultaneously transmitting light in their predetermined passband to the spatial light modulator (816) and reflecting light outside their predetermined passband to the light recycler (204).

16. The method of Claim 15, further comprising
transmitting a third primary portion of said beam of light through a third region of the dynamic filter.

17. The method of Claim 16, wherein the third region of the dynamic filter transmits white light.

**18.** The method of Claim 16, wherein the third region of said dynamic filter reflects a remainder of said beam of light outside the third primary portion.

**Patentansprüche**

**1.** Anzeigesystem, umfassend:

eine Lichtquelle (804) zur Erzeugung eines Strahls aus weißem Licht (904);
ein dynamisches Filter (814) zum Filtern des weißen Lichtstrahls, wobei das dynamische Filter wenigstens zwei Bereiche (906, 914) mit verschiedenen vorbestimmten Durchlassbändern beinhaltet;
einen räumlichen Lichtmodulator (816) zur selektiven Modulation des durch das dynamische Filter (814) transmittierten Lichts; und
eine Linse (212) zur Fokusierung des durch den Lichtmodulator (816) modulierten Lichts auf einer Bildebene;
wobei der erste Bereich (906) des dynamischen Filters angepasst ist, um einen ersten Primärfarbstrahl (907) zum räumlichen Lichtmodulator (816) zu transmittieren und einen ersten Reststrahl (908) zu reflektieren; und
wobei der zweite Bereich (914) des dynamischen Filters angepasst ist, um einen zweiten Primärfarbstrahl (916) zum räumlichen Lichtmodulator (816) zu transmittieren und einen zweiten Reststrahl zu reflektieren;
**gekennzeichnet durch**
einen Lichtrückgewinner (204) umfassend

einen Lichtsammler (902) zum Wiedereinfangen wenigstens des ersten Reststrahls (908) und
einen Lichtreflektor (910) zur Reflexion wenigstens eines Teils des ersten Reststrahls (912) zurück zum zweiten Bereich des dynamischen Filters (814);
wobei der Lichtsammler zwischen dem Lichtreflektor (910) und dem dynamischen Filter (814) angeordnet ist und
wobei die wenigstens zwei Bereiche des dynamischen Filters (904; 914) angeordnet sind, um gleichzeitig Licht in ihrem vorbestimmten Durchlassband zum räumlichen Lichtmodulator (816) zu transmittieren und Licht außerhalb ihres vorbestimmten Durchlassbands zum Lichtrückgewinner (204) zu reflektieren.

**2.** Anzeigesystem gemäß Anspruch 1, wobei der Lichtsammler (204; 810; 902; 1606) angeordnet ist, um das reflektierte Licht zu homogenisieren.

**3.** Anzeigesystem gemäß einem der vorhergehenden Ansprüche, wobei der Lichtsammler (204; 810; 902; 1606) ein reflektierendes Gehäuse umfasst.

**4.** Anzeigesystem gemäß einem der vorhergehenden Ansprüche, wobei der Lichtsammler (204; 810; 902; 1606) einen Glasstab umfasst.

**5.** Anzeigesystem gemäß einem der vorhergehenden Ansprüche, wobei der Lichtsammler (204; 810; 902; 1606) einen verspiegelten Glasstab umfasst.

**6.** Anzeigesystem gemäß einem der vorhergehenden Ansprüche, wobei der Lichtsammler (204; 810; 902; 1606) einen Hohlzylinder umfasst.

**7.** Anzeigesystem gemäß einem der vorhergehenden Ansprüche, wobei der Lichtsammler (204; 810; 902; 1606) einen reflektierenden hohlen rechteckigen Zylinder umfasst.

**8.** Anzeigesystem gemäß einem der vorhergehenden Ansprüche, wobei der Lichtsammler (204; 810; 902; 1606) eine reflektierende Eingangsapertur umfasst.

**9.** Anzeigesystem gemäß einem der vorhergehenden Ansprüche, wobei der Lichtsammler (204; 810; 902; 1606) eine rückreflektierende Eingangsapertur umfasst.

**10.** Anzeigesystem gemäß einem der vorhergehenden Ansprüche, wobei das Filter (206; 814; 1602) ein Farbrad ist.

**11.** Anzeigesystem gemäß einem der vorhergehenden Ansprüche, wobei das Filter (206; 814; 1602) ein drei-farbiges Farbrad ist.

**12.** Anzeigesystem gemäß einem der vorhergehenden Ansprüche, wobei das Filter (206; 814; 1602) ferner einen Bereich umfasst, welcher weißes Licht transmittiert.

**13.** Anzeigesystem gemäß einem der vorhergehenden Ansprüche, wobei das Filter (206; 814; 1602) ein Farbrad mit einer Mehrzahl von Filtersegmenten ist.

**14.** Anzeigesystem gemäß einem der vorhergehenden Ansprüche, wobei das Filter (206; 814; 1602) ein Farbrad mit einer Mehrzahl von Filtersegmenten ist, welche in einer Spirale angeordnet sind.

**15.** Verfahren zur Erzeugung eines Bilds, umfassend die Verfahrensschritte:

Bereitstellen eines Strahls aus weißem Licht (904);
Auftreffen des weißen Lichtstrahls auf wenigstens zwei Bereiche eines dynamischen Filters (814), wobei jeder Bereich ein verschiedenes vorbestimmtes Durchlassband aufweist;
selektives Modulieren des durch das dynamische Filter transmittierten Lichts durch einen räumlichen Lichtmodulator (816);
Fokussieren des durch den Lichtmodulator (814) modulierten Lichts auf eine Bildebene (214),
wobei ein erster Bereich (906) des dynamischen Filters einen ersten Primärfarbstrahl (907) zum räumlichen Lichtmodulator (816) transmittiert und einen ersten Reststrahl (908) reflektiert; und
wobei ein zweiter Bereich (914) des dynamischen Filters einen zweiten Primärfarbstrahl (916) zum räumlichen Lichtmodulator (816) transmittiert und einen zweiten Reststrahl reflektiert;
**gekennzeichnet durch**,
Wiedergewinnung des **durch** das dynamische Filter reflektierten Lichts **durch**
Wiedereinfangen wenigstens des ersten Reststrahls (908) in einem Lichtsammler (902) und
Reflektieren wenigstens eines Teils des ersten Reststrahls (912) zurück zum zweiten Bereich des dynamischen Filters (914) mit einem Lichtreflektor (910);
wobei der Lichtsammler (902) zwischen dem Lichtreflektor (910) und dem dynamischen Filter (814) angeordnet ist und
wobei die wenigstens zwei Bereiche des dynamischen Filters (904; 914) gleichzeitig Licht in ihrem vorbestimmten Durchlassband zum räumlichen Lichtmodulator (816) transmittieren und Licht außerhalb ihres vorbestimmten Durchlassbands zum Lichtrückgewinner (204) reflektieren.

**16.** Verfahren nach Anspruch 15, ferner umfassend
Transmittieren eines dritten Primäranteils des Lichtstrahls durch einen dritten Bereich des dynamischen Filters.

**17.** Verfahren nach Anspruch 16, wobei der dritte Bereich des dynamischen Filters weißes Licht transmittiert.

**18.** Verfahren nach Anspruch 16, wobei der dritte Bereich des dynamischen Filters einen Reststrahl außerhalb des dritten Primäranteils reflektiert.

## Revendications

**1.** Système d'affichage comprenant :

une source de lumière (804) destinée à produire un faisceau de lumière blanche (904) ;
un filtre dynamique (814) destiné à filtrer ledit faisceau de lumière blanche, le filtre dynamique comprenant au moins deux régions (906, 914) qui présentent une bande passante prédéterminée différente ;
un modulateur de lumière spatial (816) destiné à moduler de manière sélective la lumière transmise par le filtre dynamique (814) ; et
une lentille (212) destinée à focaliser la lumière modulée par le modulateur de lumière (816) sur un plan d'image ;
dans lequel une première région (906) dudit filtre dynamique est adaptée de manière à transmettre un premier faisceau de couleur primaire (907) au modulateur de lumière spatial (816) et à réfléchir un premier faisceau de reste (908) ; et
dans lequel une deuxième région (914) dudit filtre dynamique est adaptée de manière à transmettre un deuxième faisceau de couleur primaire (916) au modulateur de lumière spatial (816) et à réfléchir un deuxième faisceau de reste ;
**caractérisé par** :

un dispositif de recyclage de lumière (204) qui comprend :

un intégrateur de lumière (902) destiné à capturer de nouveau au moins ledit premier faisceau de reste (908) ; et

un réflecteur de lumière (910) destiné à réfléchir au moins une partie dudit premier faisceau de reste (912) en retour vers ladite deuxième région du filtre dynamique (914) ;

dans lequel l'intégrateur de lumière est positionné entre le réflecteur de lumière (910) et le filtre dynamique (814) ; et

dans lequel lesdites au moins deux régions du filtre dynamique (906 ; 914) sont agencées de façon à transmettre de manière simultanée la lumière, dans leur bande passante prédéterminée, au modulateur de lumière spatial (816) et à réfléchir la lumière qui se situe en dehors de leur bande passante prédéterminée vers le dispositif de recyclage de lumière (204).

2. Système d'affichage selon la revendication 1, dans lequel l'intégrateur de lumière (204 ; 810 ; 902 ; 1606) est organisé de manière à homogénéiser la lumière réfléchie.

3. Système d'affichage selon l'une quelconque des revendications précédentes, dans lequel ledit intégrateur de lumière (204 ; 810 ; 902 ; 1606) comprend une enceinte réfléchissante.

4. Système d'affichage selon l'une quelconque des revendications précédentes, dans lequel ledit intégrateur de lumière (204 ; 810 ; 902 ; 1606) comprend une tige de verre.

5. Système d'affichage selon l'une quelconque des revendications précédentes, dans lequel ledit intégrateur de lumière (204 ; 810 ; 902 ; 1606) comprend une tige de verre miroir.

6. Système d'affichage selon l'une quelconque des revendications précédentes, dans lequel ledit intégrateur de lumière (204 ; 810 ; 902 ; 1606) comprend un cylindre creux.

7. Système d'affichage selon l'une quelconque des revendications précédentes, dans lequel ledit intégrateur de lumière (204 ; 810 ; 902 ; 1606) comprend un cylindre rectangulaire creux réfléchissant.

8. Système d'affichage selon l'une quelconque des revendications précédentes, dans lequel ledit intégrateur de lumière (204 ; 810 ; 902 ; 1606) comprend une ouverture d'entrée réfléchissante.

9. Système d'affichage selon l'une quelconque des revendications précédentes, dans lequel ledit intégrateur de lumière (204 ; 810 ; 902 ; 1606) comprend une ouverture d'entrée rétroréfléchissante.

10. Système d'affichage selon l'une quelconque des revendications précédentes, dans lequel ledit filtre (206 ; 814 ; 1602) est une roue de couleur.

11. Système d'affichage selon l'une quelconque des revendications précédentes, dans lequel ledit filtre (206 ; 814 ; 1602) est une roue de couleur à trois couleurs.

12. Système d'affichage selon l'une quelconque des revendications précédentes, dans lequel ledit filtre (206 ; 814 ; 1602) comprend en outre une région qui transmet la lumière blanche.

13. Système d'affichage selon l'une quelconque des revendications précédentes, dans lequel ledit filtre (206 ; 814 ; 1602) est une roue de couleur qui présente une pluralité de segments de filtre.

14. Système d'affichage selon l'une quelconque des revendications précédentes, dans lequel ledit filtre (206 ; 814 ; 1602) est une roue de couleur qui présente une pluralité de segments de filtre disposés en une spirale.

15. Procédé de production d'une image, ledit procédé comprenant les étapes consistant à :

fournir un faisceau de lumière blanche (904) ;

diriger ledit faisceau de lumière blanche sur deux régions au moins d'un filtre dynamique (814) - chaque région présentant une bande passante prédéterminée différente ;

moduler de manière sélective la lumière transmise par le filtre dynamique à l'aide d'un modulateur de lumière spatial (816) ;

focaliser la lumière modulée par le modulateur de lumière (816) sur un plan d'image (214) ;

dans lequel une première région (906) dudit filtre dynamique transmet un premier faisceau de couleur primaire (907) au modulateur de lumière spatial (816) et réfléchit un premier faisceau de reste (908) ; et

dans lequel une deuxième région (914) dudit filtre dynamique transmet un deuxième faisceau de couleur primaire (916) au modulateur de lumière spatial (816) et réfléchit un deuxième faisceau de reste (908) ;

**caractérisé par** :

le fait de recycler la lumière réfléchie par le filtre dynamique en capturant de nouveau au moins ledit premier faisceau de reste (908) dans un intégrateur de lumière (902) ; et

le fait de réfléchir au moins une partie dudit premier faisceau de reste (912) en retour vers ladite deuxième région du filtre dynamique (914) à l'aide d'un réflecteur (910) ;

dans lequel l'intégrateur de lumière (902) est positionné entre le réflecteur de lumière (910) et le filtre dynamique (814) ; et

dans lequel lesdites au moins deux régions du filtre dynamique (906 ; 914) transmettent de manière simultanée la lumière, dans leur bande passante prédéterminée, au modulateur de lumière spatial (816) et réfléchissent la lumière qui se situe en dehors de leur bande passante prédéterminée vers le dispositif de recyclage de lumière (204).

16. Procédé selon la revendication 15, comprenant en outre une étape consistant à :

transmettre une troisième partie primaire dudit faisceau de lumière à travers une troisième région du filtre dynamique.

17. Procédé selon la revendication 16, dans lequel la troisième région du filtre dynamique transmet de la lumière blanche.

18. Procédé selon la revendication 16, dans lequel la troisième région dudit filtre dynamique réfléchit le reste dudit faisceau de lumière en dehors de la troisième partie primaire.

FIG. 1
(PRIOR ART)

FIG. 2

FIG. 3

FIG. 4

*FIG. 5*    *FIG. 6*    *FIG. 7*

*FIG. 8*

*FIG. 9*

*FIG. 10*

1100

1102

*FIG. 11*

902

1400

*FIG. 14*

1200

1102

*FIG. 12*

1300

*FIG. 13*

*FIG. 15*

*FIG. 16*

Legend:
- ✕ 1.5 mm
- ◆ 1.3 mm
- ■ 1.0 mm
- ▲ 0.7 mm
- ✕ 1.5 mm
- ✕ 1.3 mm
- ■ 1.0 mm
- ▲ .7 mm

FIG. 17

EP 1 098 536 B1

Fig. 1B

EP 1 098 536 B1

Fig. 19

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 5650832 A
- US 5612753 A